# EUROPEAN PATENT SPECIFICATION

(11) **EP 3 335 906 B1**
(45) Date of publication and mention of the grant of the patent: **09.10.2019**
(21) Application number: 17201795.6
(22) Date of filing: 15.11.2017
(51) Int. Cl.: B60C 9/02, B60C 15/00, B60C 15/05, B60C 9/00

(54) **PNEUMATIC TIRE**
LUFTREIFEN
PNEUMATIQUE

(30) Priority: 25.11.2016 JP 2016229219
(43) Date of publication of application: 20.06.2018
(73) Proprietor: Sumitomo Rubber Industries, Ltd., Kobe-shi, Hyogo 651-0072 (JP)
(72) Inventor: SUGIYAMA, Naoki, Kobe-shi, Hyogo 651-0072 (JP); ITO, Hiroshi, Kobe-shi, Hyogo 651-0072 (JP)
(74) Representative: TBK

(56) References cited:
- EP-A1- 3 090 885
- WO-A1-01/43957
- WO-A1-2014/104680
- DE-A1- 4 203 568
- JP-A- 2013 075 505

## Description

### BACKGROUND OF THE INVENTION

### Field of the Invention

The present invention relates to a pneumatic tire according to the preamble of claim 1 having excellent productivity by preventing deformation, wrinkling, curling, or the like of a carcass ply piece during tire production.

### Description of the Background Art

In recent years, for example, a pneumatic tire (a pneumatic tire produced by using a rigid core) having a carcass formed by arranging ribbon-shaped carcass ply pieces, in each of which a length in a tire circumferential direction is shorter than a length in a radial direction, in the tire circumferential direction has been proposed (see, for example, JP 2013 075505 A). Each carcass ply piece includes a plurality of carcass cords (warps) arranged along the radial direction, wefts extending in a direction perpendicular to the carcass cords, and a topping rubber covering the carcass cords and the wefts. In addition, carcass cords twisted in the same direction are adopted for the respective carcass ply pieces. A generic pneumatic tire having the features of the preamble of claim 1 is shown by WO 01/43957 A.

However, the above-described ribbon-shaped carcass ply pieces have very low stiffness at the stage prior to production of a green tire. Thus, tendency of carcass ply pieces being twisted or curled due to untwisting torque of the carcass cords or influence of the wefts is noticeable, and has an adverse effect on the productivity of the tire.

### SUMMARY OF THE INVENTION

The present invention has been made in view of the above circumstances, and a main object of the present invention is to provide a pneumatic tire that can exhibit excellent productivity. The object is achieved by a pneumatic tire having the features of claim 1. Further advantageous developments of the present invention are set out in the dependent claims.

A pneumatic tire according to the present invention is a pneumatic tire including a carcass extending from a tread portion through sidewall portions to bead portions, wherein the carcass is formed by arranging ribbon-shaped carcass ply pieces, in each of which a length in a tire circumferential direction is shorter than a length in a radial direction, in the tire circumferential direction, each carcass ply piece includes a plurality of carcass cords arranged as warps along the radial direction without wefts, and a topping rubber covering the carcass cords, and the carcass cords include first cords and second cords having a twisting direction opposite to that of the first cords.

In the pneumatic tire according to the present invention, preferably, the first cords are each formed by secondly twisting, in a Z direction, a plurality of strands each obtained through first twist in an S direction; and the second cords are each formed by secondly twisting, in the S direction, a plurality of strands each obtained through first twist in the Z direction.

In the pneumatic tire according to the present invention, the carcass cords are preferably aramid fiber cords.

In the pneumatic tire according to the present invention, the topping rubber preferably contains short fibers.

In each carcass ply piece of the pneumatic tire according to the present invention, a number ratio between the first cords and the second cords is preferably 8:2 to 2:8.

In the pneumatic tire according to the present invention, preferably, each carcass ply piece has a first side edge and a second side edge extending along the radial direction, the first cord is disposed closest to the first side edge, the second cord is disposed closest to the second side edge, and each carcass ply piece is disposed such that the first side edge thereof faces the second side edge of another carcass ply piece.

The carcass of the pneumatic tire according to the present invention is formed by arranging the ribbon-shaped carcass ply pieces, in which the length in the tire circumferential direction is shorter than the length in the radial direction, in the tire circumferential direction. Each carcass ply piece includes the plurality of carcass cords arranged as warps along the radial direction without wefts, and the topping rubber covering the carcass cords. The carcass ply piece that does not have any weft can prevent twisting or curling due to influence of wefts.

In addition, the carcass cords include the first cords and the second cords having a twisting direction opposite to that of the first cords. Such first cords and second cords can effectively inhibit curling of the carcass ply piece by cancelling untwisting torque thereof by each other.

Therefore, the pneumatic tire according to the present invention can exhibit excellent productivity.

### BRIEF DESCRIPTION OF THE DRAWINGS

FIG. 1 is a meridian cross-sectional view of a pneumatic tire according to an embodiment of the present invention;
FIG. 2 is a cross-sectional view during vulcanization molding of the pneumatic tire in FIG. 1;
FIG. 3(a) is a cross-sectional view when a carcass ply is formed on a rigid core;
FIG. 3(b) is a side view of the carcass ply formed on the rigid core;
FIG. 4 is a perspective view of a carcass ply piece showing arrangement of carcass cords;
FIG. 5(a) is an enlarged view of a first cord and a second cord;
FIG. 5(b) is an enlarged view of strands of the first cord and strands of the second cord; and
FIG. 6 is a partially enlarged view of the carcass ply at a tread portion.

### DESCRIPTION OF THE PREFERRED EMBODIMENTS

Hereinafter, an embodiment of the present invention will be described with reference to the drawings.

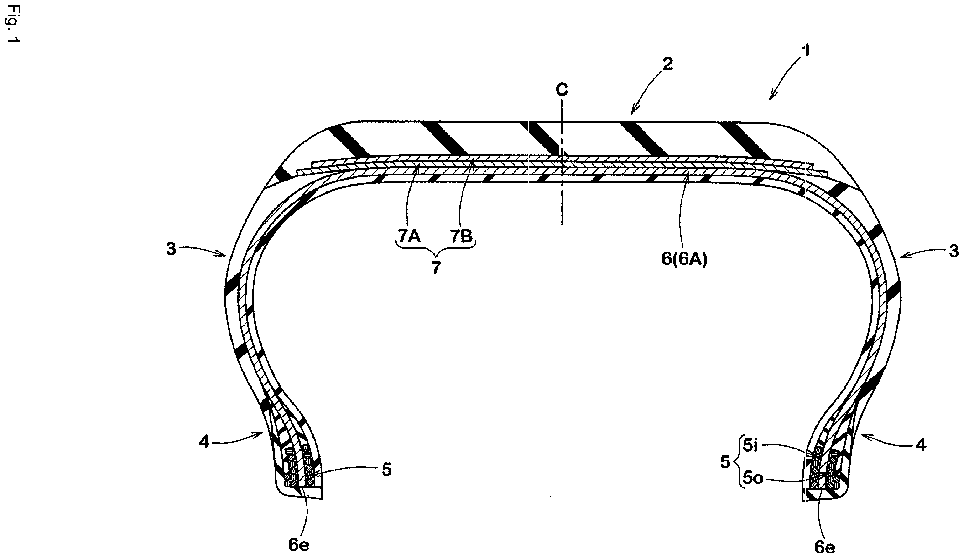

FIG. 1 is a tire meridian cross-sectional view of a pneumatic tire (hereinafter, referred to merely as "tire") 1 according to the present embodiment, in a normal state, including a tire rotation axis. The tire 1 according to the present embodiment is suitably used, for example, for a passenger car.

The "normal state" is a state where the tire is mounted to a normal rim (not shown) and inflated to a normal internal pressure and no load is applied to the tire. Hereinafter, unless otherwise specified, dimensions of components of the tire and the like are values measured in the normal state.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

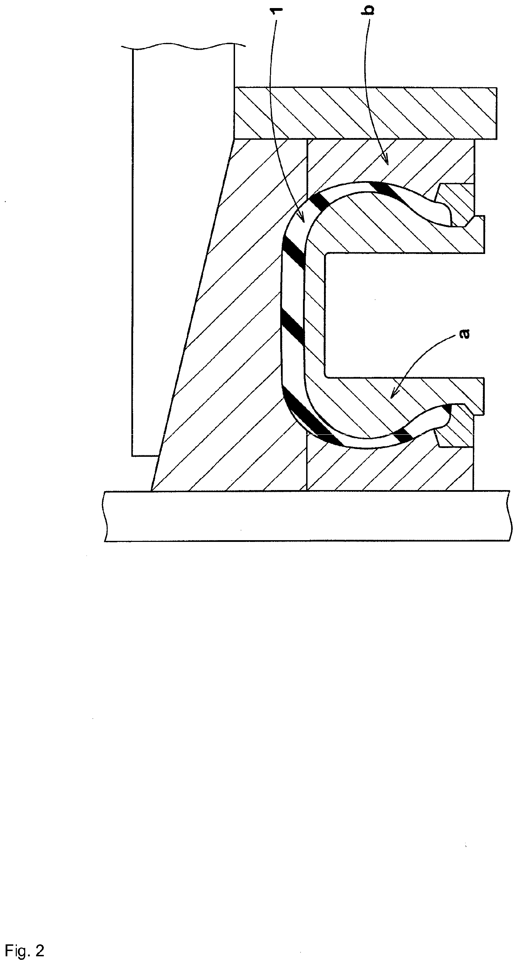

FIG. 2 shows a cross-sectional view during vulcanization molding of the tire 1 according to the present embodiment. As shown in FIG. 2, vulcanization molding of the tire 1 according to the present invention is performed in a cavity between a rigid core a for forming the tire inner side and a vulcanization mold b for forming the tire outer side, without the tire 1 being substantially stretched. Such a tire 1 has excellent uniformity since the substantially same shape is maintained before and after the vulcanization molding.

As shown in FIG. 1, the tire 1 according to the present embodiment includes a carcass 6 extending from a tread portion 2 through sidewall portions 3 to bead portions 4, and a belt layer 7 disposed radially outward of the carcass 6 and inward of the tread portion 2.

The carcass 6 is composed of, for example, a carcass ply 6A in which carcass cords 11 are radially arranged. Outer edge portions 6e of the carcass ply 6A are, for example, retained within bead cores 5 without being turned up around the bead cores 5.

As the carcass cords 11, for example, organic fiber cords are suitably used. In the present embodiment, for example, aramid fiber cords are used. For example, the aramid fiber cords have excellent tensile strength as compared to polyester, and thus serve to enhance steering stability. However, the material of the carcass cords 11 is not limited to aramid fiber.

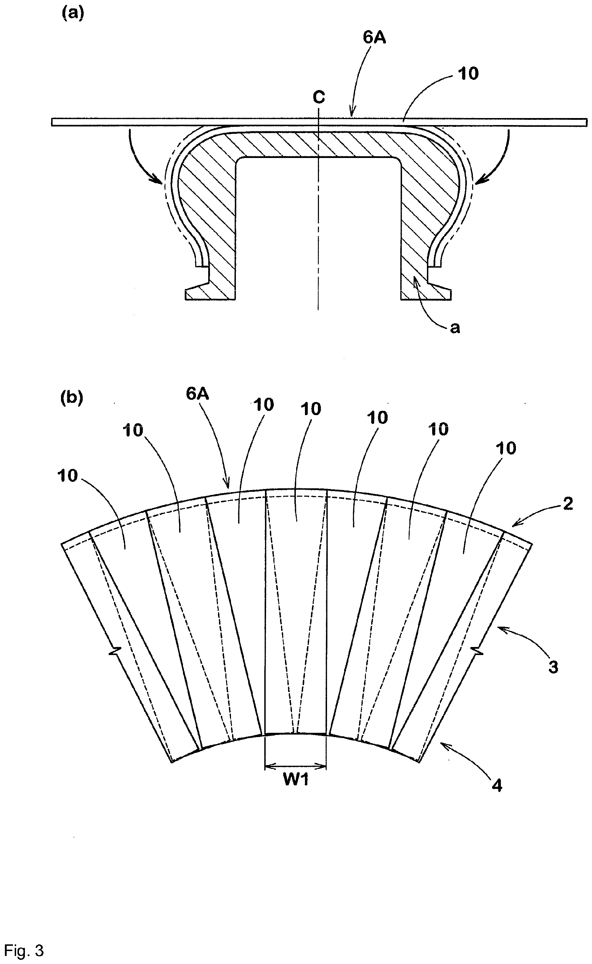

FIG. 3(a) shows a cross-sectional view when the carcass ply 6A is formed on the rigid core a, and FIG. 3(b) shows a side view of the carcass ply 6A formed on the rigid core a. As shown in FIGS. 3(a) and 3(b), in the carcass ply 6A, carcass ply pieces 10 are arranged in the tire circumferential direction. Each carcass ply piece 10 has a ribbon shape in which a length in the tire circumferential direction is shorter than a length in the radial direction. The length W1 in the tire circumferential direction is, for example, 20 to 30 mm. In the present embodiment, at the tread portion 2, the side edges of the respective carcass ply pieces 10 are butted against each other. Meanwhile, at the sidewall portions 3 and the bead portions 4, the respective carcass ply pieces 10 are partially overlapped with each other. The carcass ply pieces 10 will be described in more detail later.

As shown in FIG. 1, each bead core 5 includes inner and outer core pieces 5i and 5o in the tire axial direction. Each of the core pieces 5i and 5o is formed, for example, by winding a non-stretchable bead wire in a spiral manner in the tire circumferential direction. The core pieces 5i and 5o are disposed at both sides of the outer edge portion 6e of the carcass ply 6A such that the outer edge portion 6e is interposed therebetween.

The belt layer 7 is formed of, for example, two belt plies 7A and 7B in each of which belt cords are arranged at a cord angle of 10° to 45° with respect to the tire circumferential direction. The belt plies 7A and 7B overlap each other such that the belt cords of the belt plies 7A and 7B intersect each other. For the belt cords, for example, steel is suitably adopted. Thus, the stiffness of the tread portion 2 can be effectively enhanced.

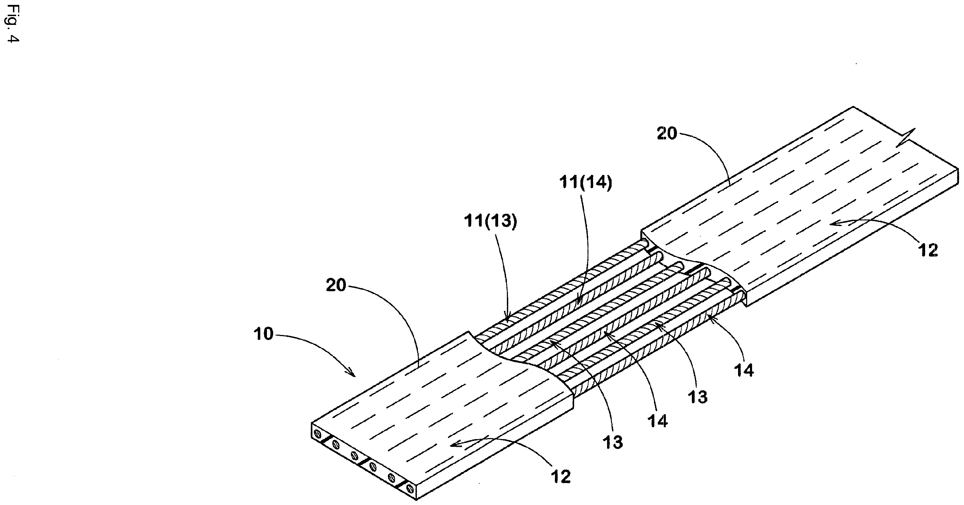

FIG. 4 shows a perspective view of the carcass ply piece 10. As shown in FIG. 4, each carcass ply piece 10 includes a plurality of carcass cords 11 arranged as warps in the radial direction without wefts, and a topping rubber 12 covering the carcass cords 11. The carcass ply piece that does not have any weft can prevent twisting or curling due to influence of wefts. In FIG. 4, for easy understanding of arrangement of the carcass cords 11, a part of the topping rubber 12 is omitted.

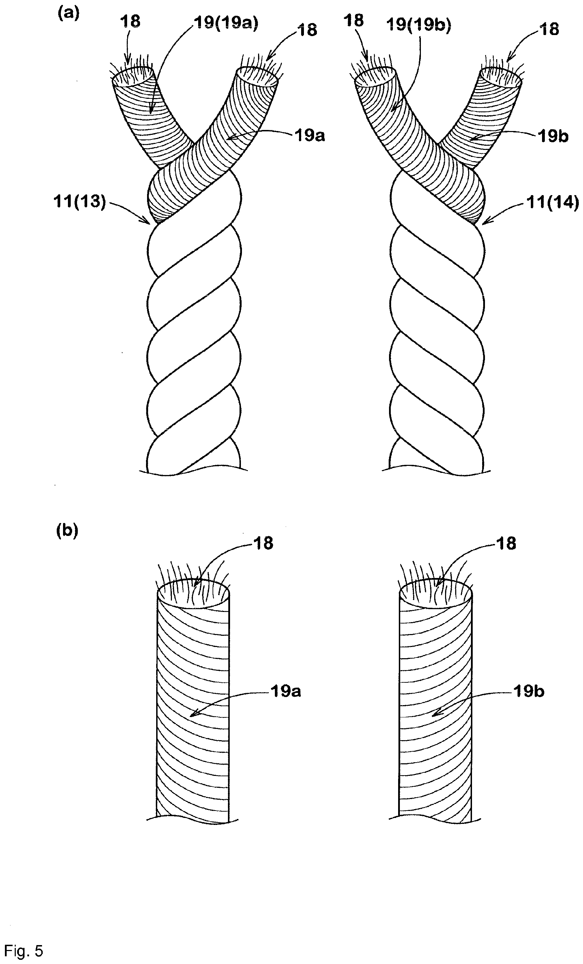

FIG. 5(a) shows an enlarged view of the carcass cords 11. As shown in FIG. 5(a), the carcass cords 11 include first cords 13 and a second cords 14 having a twisting direction opposite to that of the first cords 13. Such first cords 13 and second cords 14 can effectively inhibit curling of the carcass ply piece 10 by cancelling untwisting torque thereof by each other. Therefore, the pneumatic tire according to the present invention can exhibit excellent productivity.

Regarding a pneumatic tire in which a ply material having wefts is used, during vulcanization molding, stress applied to cords in a portion in which the wefts are provided is different from that in a portion in which the wefts are not provided, so that arrangement of the cords tends to be disrupted. The carcass ply pieces 10 according to the present embodiment do not have any weft and thus can inhibit disruption of the above cord arrangement.

As shown in FIG. 4, the first cords 13 and the second cords 14 are provided, for example, alternately in the tire circumferential direction. However, the arrangement of the first cords 13 and the second cords 14 is not limited to such arrangement, and cord groups each composed of a plurality of the first cords 13 and cord groups each composed of a plurality of the second cords 14 may be provided alternately in the tire circumferential direction.

In each carcass ply piece 10, the number ratio N1:N2 between the number N1 of the first cords 13 and the number N2 of the second cords 14 is preferably 8:2 to 2:8. Such arrangement of the respective cords 13 and 14 can effectively prevent curling or the like of the carcass ply piece 10.

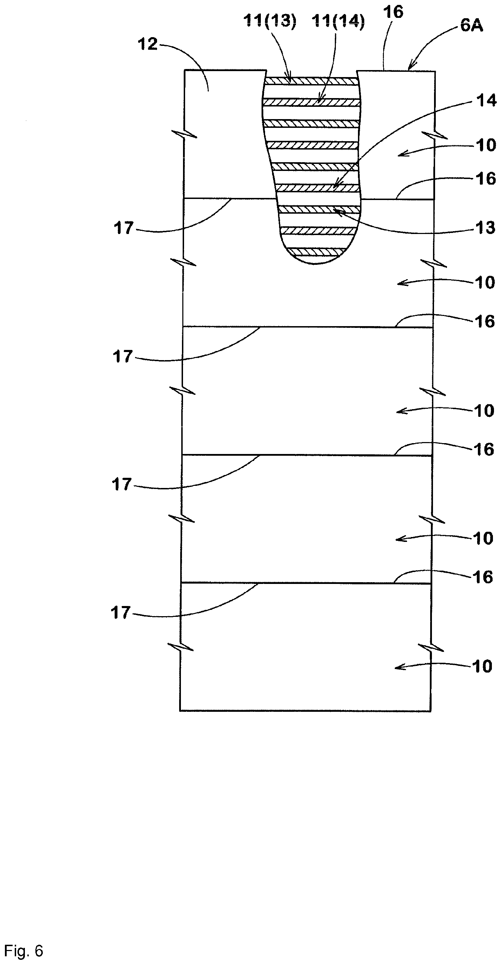

FIG. 6 shows an enlarged view of the carcass ply 6A at the tread portion 2. In FIG. 6, for easy understanding of the arrangement of the carcass cords 11, a part of the topping rubber 12 is omitted. As shown in FIG. 6, at the tread portion 2, the multiple carcass ply pieces 10 are arranged in the tire circumferential direction in the carcass 6. The respective carcass ply pieces 10 are arranged in a state where the side edges thereof are butted against each other.

Each carcass ply piece 10 has, for example, a first side edge 16 and a second side edge 17 extending along the radial direction. In the present embodiment, the first cord 13 is disposed closest to the first side edge 16, and the second cord 14 is disposed closest to the second side edge 17. Furthermore, each carcass ply piece 10 is arranged such that the first side edge 16 thereof faces the second side edge 17 of another carcass ply piece 10. Accordingly, at each of connection portions of the respective carcass ply pieces 10, the first cord 13 and the second cord 14 are adjacent to each other in the tire circumferential direction. Such arrangement of the respective cords 13 and 14 serves to enhance the uniformity of the tire.

As shown in FIG. 5(a), the first cords 13 and the second cords 14 according to the present embodiment are each a double-twisted cord formed by secondly twisting a plurality of strands 19 each of which is formed by firstly twisting a filament bundle 18. In the present embodiment, one cord is formed by secondly twisting two strands 19.

FIG. 5(b) shows an enlarged view of strands 19a and 19b of the first cord 13 and the second cord 14. As shown in FIGS. 5(a) and 5(b), as a further preferred embodiment, the first cords 13 according to the present embodiment are each formed by secondly twisting, in a Z direction, a plurality of strands 19a obtained through first twist in an S direction. The second cords 14 are each formed by secondly twisting, in the S direction, a plurality of strands 19b obtained through first twist in the Z direction. Such cords 13 and 14 have small untwisting torque, and the untwisting torque thereof is cancelled by each other. Thus, the cords 13 and 14 can further inhibit twisting and curling of the carcass ply piece 10. However, the present invention is not limited to such an embodiment, and the directions of second twist of the respective cords 13 and 14 only need to be opposite to each other. In addition, the respective cords 13 and 14 may be single-twisted cords having twisting directions opposite to each other. The S direction and the Z direction are defined as spiral directions conforming to the term "twisting direction" defined in JISG3510.

In order to enhance durability, the number of first twists N1 (twists/10 cm) of each strand is preferably 65 to 75, for example. The number of second twists N2 (twists/10 cm) of two strands is preferably 65 to 75, for example.

In order to achieve steering stability and ride comfort in a balanced manner, the total fineness of each cord is preferably not less than 800 dtex and more preferably not less than 1000 dtex, and is preferably not greater than 1400 dtex and more preferably not greater than 1200 dtex.

As shown in FIG. 4, the topping rubber 12 of the carcass ply piece 10 preferably contains short fibers 20 extending along the carcass cords, for example. As the short fibers 20, for example, aramid fibers, glass fibers, carbon fibers, or the like can be adopted.

The short fibers 20 according to the present embodiment preferably have an average fiber diameter of about 1 to 100 µm and an average fiber length of about 0.1 to 10.0 mm, for example. The carcass ply piece 10 in which the short fibers 20 are contained in the topping rubber 12 has further increased stiffness in the radial direction and can provide excellent steering stability.

Although the pneumatic tire according to the embodiment of the present invention has been described in detail above, the present invention is not limited to the above specific embodiment, and various modifications can be made to implement the present invention.

### EXAMPLES

Pneumatic tires with a size of 195/65R15 having the configuration in FIG. 1 were produced as samples by using carcass ply pieces based on specifications in Table 1. Each tire was measured for a rate of occurrence of ply attachment failure, which is due to twisting or curling of a carcass ply piece. The common specifications of the carcass ply pieces and a test method are as follows.
Width of carcass ply piece: 26.0 mm
Thickness of carcass ply piece: 1.0 mm
Material of carcass cord: aramid fiber
Total fineness of carcass cord: 1100 dtex, double twist
Number of twists of carcass cord
   First cord
      First twist: S direction, 69 twists/10 cm
      Second twist: Z direction, 69 twists/10 cm
   Second cord
      First twist: Z direction, 69 twists/10 cm
      Second twist: S direction, 69 twists/10 cm

### <Rate of Occurrence of Ply Attachment Failure>

The respective tires were measured for a rate of occurrence of ply attachment failure when 1000 tires were produced. Ply attachment failure is failure occurring due to curling or twisting of a carcass ply piece. The results are indexes based on the result of a comparative example defined as 100. A lower value indicates a lower rate of occurrence of the failure, and indicates that the result is better.

The results of the test are shown in Table 1.

**[Table 1]**

| | Comparative Example | Example 1 | Example 2 | Example 3 | Example 4 | Example 5 |
|---|---|---|---|---|---|---|
| Number N1 of first cords | 20 | 10 | 12 | 14 | 16 | 18 |
| Number N2 of second cords | 0 | 10 | 8 | 6 | 4 | 2 |
| Number ratio N1:N2 between first cords and second cords | - | 1:1 | 3:2 | 7:3 | 8:2 | 9:1 |
| Rate of occurrence of ply attachment failure (index) | 100 | 0 | 0 | 0 | 11 | 46 |

As a result of the test, it can be confirmed that the pneumatic tire of each Example has a low rate of occurrence of ply attachment failure due to prevention of curling or twisting of the carcass ply pieces, and thus has excellent productivity.

A pneumatic tire that can exhibit excellent productivity is provided.

## Claims

1. A pneumatic tire (1) comprising a carcass (6) extending from a tread portion (2) through sidewall portions (3) to bead portions (4), wherein
the carcass (6) is formed by arranging ribbon-shaped carcass ply pieces (10), in each of which a length in a tire circumferential direction is shorter than a length in a radial direction, in the tire circumferential direction, and
each carcass ply piece (10) includes a plurality of carcass cords (11) arranged as warps along the radial direction, and a topping rubber (12) covering the carcass cords (11), **characterized in that**
the plurality of carcass cords (11) is arranged without wefts, and **in that**
the carcass cords (11) include first cords (13) and second cords (14) having a twisting direction opposite to that of the first cords (13).

2. The pneumatic tire (1) according to claim 1, wherein
the first cords (13) are each formed by secondly twisting, in a Z direction, a plurality of strands (19, 19a) each obtained through first twist in an S direction, and
the second cords (14) are each formed by secondly twisting, in the S direction, a plurality of strands (19, 19b) each obtained through first twist in the Z direction.

3. The pneumatic tire (1) according to claim 1 or 2, wherein the carcass cords (11) are aramid fiber cords.

4. The pneumatic tire (1) according to any one of claims 1 to 3, wherein the topping rubber (12) contains short fibers (20).

5. The pneumatic tire (1) according to any one of claims 1 to 4, wherein a number ratio between the first cords (13) and the second cords (14) in each carcass ply piece (10) is 8:2 to 2:8.

6. The pneumatic tire (1) according to any one of claims 1 to 5, wherein
each carcass ply piece (10) has a first side edge (16) and a second side edge (17) extending along the radial direction,
the first cord (13) is disposed closest to the first side edge (16), and the second cord (14) is disposed closest to the second side edge (17), and
each carcass ply piece (10) is disposed such that the first side edge (16) thereof faces the second side edge (17) of another carcass ply piece (10).

## Patentansprüche

1. Luftreifen (1), der eine Karkasse (6) aufweist, die sich aus einem Profilabschnitt (2) durch Seitenwandabschnitte (3) zu Wulstabschnitten (4) erstreckt, wobei
die Karkasse (6) ausgebildet ist, indem bandförmige Karkassenlagenteile (10), bei denen in jedem eine Länge in einer Reifenumfangsrichtung kürzer ist als eine Länge in einer Radialrichtung, in der Reifenumfangsrichtung angeordnet sind, und
jeder Karkassenlagenteil (10) eine Vielzahl von Karkassencords (11), die als Ketten entlang der Radialrichtung angeordnet sind, und eine Gummideckschicht (12) umfasst, die die Karkassencords (11) abdeckt, **dadurch gekennzeichnet, dass**
die Vielzahl von Karkassencords (11) ohne Schüsse angeordnet ist, und dass
die Karkassencords (11) erste Cords (13) und zweite Cords (14) umfassen, die eine Verdrillungsrichtung haben, die derjenigen der ersten Cords (13) entgegengesetzt ist.

2. Luftreifen (1) nach Anspruch (1), wobei
die ersten Cords (13) jeweils durch ein zweites Verdrillen in einer Z-Richtung einer Vielzahl von Fäden (19, 19a) ausgebildet sind, von denen jeder durch ein erstes Verdrillen in einer S-Richtung erlangt wird, und
die zweiten Cords (14) jeweils durch ein zweites Verdrillen in der S-Richtung einer Vielzahl von Fäden (19, 19b) ausgebildet sind, von denen jeder durch ein erstes Verdrillen in der Z-Richtung erlangt wird.

3. Luftreifen (1) nach Anspruch 1 oder 2, wobei die Karkassencords (11) Aramidfaser-Cords sind.

4. Luftreifen (1) nach einem der Ansprüche 1 bis 3, wobei die Gummideckschicht (12) Kurzfasern (20) enthält.

5. Luftreifen (1) nach einem der Ansprüche 1 bis 4, wobei ein Zahlenverhältnis zwischen den ersten Cords (13) und den zweiten Cords (14) in jedem Karkassenlagenteil (10) 8:2 bis 2:8 ist.

6. Luftreifen (1) nach einem der Ansprüche 1 bis 5, wobei
jeder Karkassenlagenteil (10) einen ersten Seitenrand (16) und einen zweiten Seitenrand (17) hat, die sich entlang der Radialrichtung erstrecken,
der erste Cord (13) am nächsten an dem ersten Seitenrand (16) angeordnet ist und der zweite Cord (14) am nächsten an dem zweiten Seitenrand (17) angeordnet ist, und
jeder Karkassenlagenteil (10) so angeordnet ist, dass sein erster Seitenrand (16) dem zweiten Seitenrand (17) eines anderen Karkassenlagenteils (10) gegenüberliegt.

## Revendications

1. Pneumatique (1) comprenant une carcasse (6) s'étendant à partir d'une partie de bande de roulement (2) à travers des parties de paroi latérale (3) jusqu'à des parties de talon (4), dans lequel
la carcasse (6) est formée en disposant des pièces de pli de carcasse en forme de ruban (10), une longueur dans une direction circonférentielle de pneumatique dans chacune d'entre elles étant plus courte qu'une longueur dans une direction radiale, dans la direction circonférentielle de pneumatique, et
chaque pièce de pli de carcasse (10) comprend une pluralité de torons de carcasse (11) agencés en enroulements le long de la direction radiale, et un caoutchouc de chape (12) recouvrant les torons de carcasse (11), **caractérisé en ce que**
la pluralité de torons de carcasse (11) est agencée sans trames, et **en ce que**
la pluralité de torons de carcasse (11) comprend des premiers torons (13) et des seconds torons (14) ayant une direction de torsion opposée à celle des premiers torons (13).

2. Pneumatique (1) selon la revendication 1, dans lequel
les premiers torons (13) sont chacun formés en effectuant une seconde torsion, dans une direction Z, sur une pluralité de fils (19, 19a) obtenus chacun par une première torsion dans une direction S, et
les seconds torons (14) sont chacun formés en effectuant une seconde torsion, dans la direction S, d'une pluralité de fils (19,19b) obtenus chacun par une première torsion dans la direction Z.

3. Pneumatique (1) selon la revendication 1 ou 2, dans lequel les torons de carcasse (11) sont des torons en fibres d'aramide.

4. Pneumatique (1) selon l'une quelconque des revendications 1 à 3, dans lequel le caoutchouc de chape (12) contient des fibres courtes (20).

5. Pneumatique (1) selon l'une quelconque des revendications 1 à 4, dans lequel un rapport numérique entre les premiers torons (13) et les seconds torons (14) dans chaque pièce de pli de carcasse (10) est de 8 :2 à 2 : 8.

6. Pneumatique (1) selon l'une quelconque des revendications 1 à 5, dans lequel
chaque pièce de pli de carcasse (10) a un premier bord latéral (16) et un second bord latéral (17) s'étendant le long de la direction radiale,
le premier toron (13) est disposé le plus à proximité du premier bord latéral (16) et le second toron (14) est disposé le plus à proximité du second bord latéral (17), et
chaque pièce de pli de carcasse (10) est disposée de telle sorte que le premier bord latéral (16) de celle-ci fait face au second bord latéral (17) d'une autre pièce de pli de carcasse (10).
